# EUROPEAN PATENT SPECIFICATION

(11) **EP 1 932 728 B1**
(45) Date of publication and mention of the grant of the patent: **31.08.2011**
(21) Application number: 07118182.0
(22) Date of filing: 10.10.2007
(51) Int. Cl.: B60R 21/13

(54) **Baffle structure of vehicle**
Prallwandstruktur für ein Fahrzeug
Structure de déflecteur de véhicule

(30) Priority: 14.12.2006 KR 20060127814
(43) Date of publication of application: 18.06.2008
(73) Proprietor: HYUNDAI MOTOR COMPANY, Seoul (KR)
(72) Inventor: Song, Seungtae, Suwon-city (KR)
(74) Representative: Viering, Jentschura & Partner

(56) References cited:
- EP-A- 0 411 448
- EP-A- 1 340 655
- WO-A-2004/094197
- FR-A- 2 859 431
- FR-A- 2 895 963
- US-A- 5 881 458

## Description

### BACKGROUND OF THE INVENTION

### (a) Field of the Invention

The present invention relates to a baffle structure of a vehicle. More particularly, the present invention relates to a baffle structure of a convertible vehicle that is applied to a Roll-Over Protection System.

### (b) Description of the Related Art

Generally, a Roll-Over Protection System (hereinafter, referred to as "ROPS") is applied to a convertible vehicle for the first time. Considering that the rate of rollover of a convertible vehicle is higher than that of a normal passenger vehicle, the ROPS is applied with a Roll Stability Control (hereinafter, referred to as "RSC") so that driving stability is enhanced.

The RSC makes use of a gyro sensor, installed in each wheel, that measures a pitching angle, a rolling angle, a speed, and a steering wheel angle of the vehicle, and the RSC anticipates rollover possibility using the information.

In the case that the vehicle is in danger of roll over, the RSC is operated so that the vehicle is stabilized. If at a low speed, an ABS is operated, while if at a high speed, an engine torque is reduced.

In a case that the vehicle rolls over in spite of the RSC operation, passengers are protected by a curtain type air bag and a frame having high rigidity. Born steel, which is 4 or 5 times stronger than normal steel, is applied to the roof of the vehicle, and seat belts are configured to all seats to protect passengers.

The ROPS is provided to a baffle box in a cassette type to protect passengers.

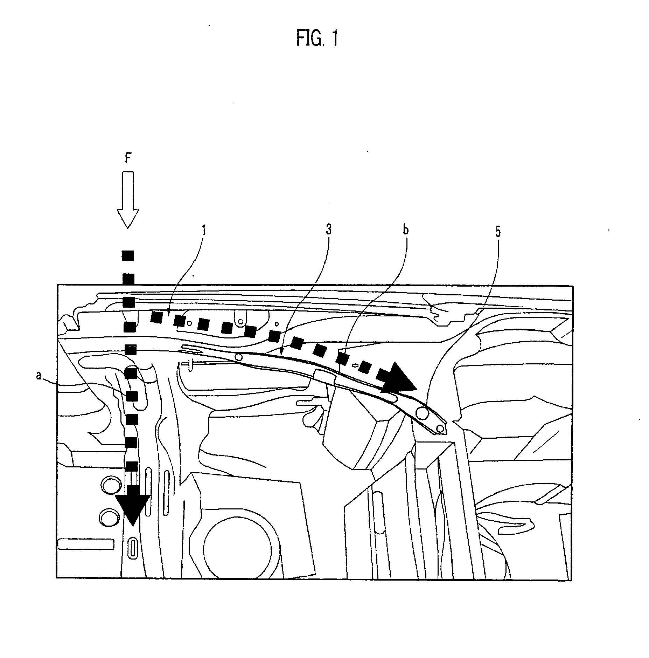

In a general baffle structure, as shown in FIG. 1, a side member 5 configuring the ROPS is connected to one side of a connecting panel 3, and the other side of the connecting panel 3 is connected to a side quarter panel 1.

In the general baffle structure, in the case that a side impact is incurred, a part of the impact is transmitted in the "a" direction via a rear floor member and another part of the impact is transmitted to the baffle via the connecting panel 3. However, it is inefficient because the impact is not transmitted to the center of the vehicle.

WO 2004/094197 A discloses a baffle structure provided to a vehicle, comprising: a baffle including an ROPS; a reinforcement member reinforcing the rigidity of the baffle; and a connecting member for connecting the reinforcement member and a side member of the vehicle, wherein the baffle comprises: a rear floor member; a front member disposed on the rear floor member; a rear member, apart from the front member, disposed on the rear floor member; a side member connected to end sides of the front member and the rear member; a lower member connected to the front member, the rear member, and the side member; an upper member, which is parallel with the lower member, connected to upper parts of the front member and the rear member; and a first center member, which is perpendicular to the rear floor member, connected to the front member, the rear member, the upper member, and the lower member.

Further baffle structures are known from FR 2 859 431 A, EP 0 411 448 A, US 5 881 458 A, and FR 2 895 963 A.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a baffle structure of a vehicle having the advantage of removing a discontinuous section of an installation part where the ROPS is installed so that a side impact may be transmitted efficiently.

According to the present invention, a baffle structure as claimed in claim 1 is provided. The dependent claims show some examples of such a baffle structure.

A baffle structure according to an exemplary embodiment of the present invention includes a baffle with the ROPS installed therein, a reinforcement member for reinforcing the rigidity of the baffle, and a connecting member for connecting the reinforcement member and a side member of the vehicle.

### BRIEF DESCRIPTION OF THE DRAWINGS

FIG. 1 is a perspective view of a general baffle structure of a vehicle.
FIG. 2 is a perspective view of a baffle structure of a vehicle according to an exemplary embodiment of the present invention.
FIG. 3 is a side view of the baffle structure of a vehicle according to the exemplary embodiment of the present invention.
FIG. 4 is a perspective view showing the transmission path of impact energy when a side impact is incurred.

### <Description of Reference Numerals Indicating Primary Elements in the Drawings>

| | |
|---|---|
| 30: rear floor member | 40: opening |
| 51: front member | 52: rear member |
| 53: side member | 54: lower member |
| 55: upper member | 56: first center member |
| 60: reinforcement member | 61: connecting flange |
| 63: center portion | 70: connecting member |
| 80: ROPS | 90: side member |

### DETAILED DESCRIPTION OF THE EMBODIMENTS

An exemplary embodiment of the present invention will hereinafter be described in detail with reference to the accompanying drawings.

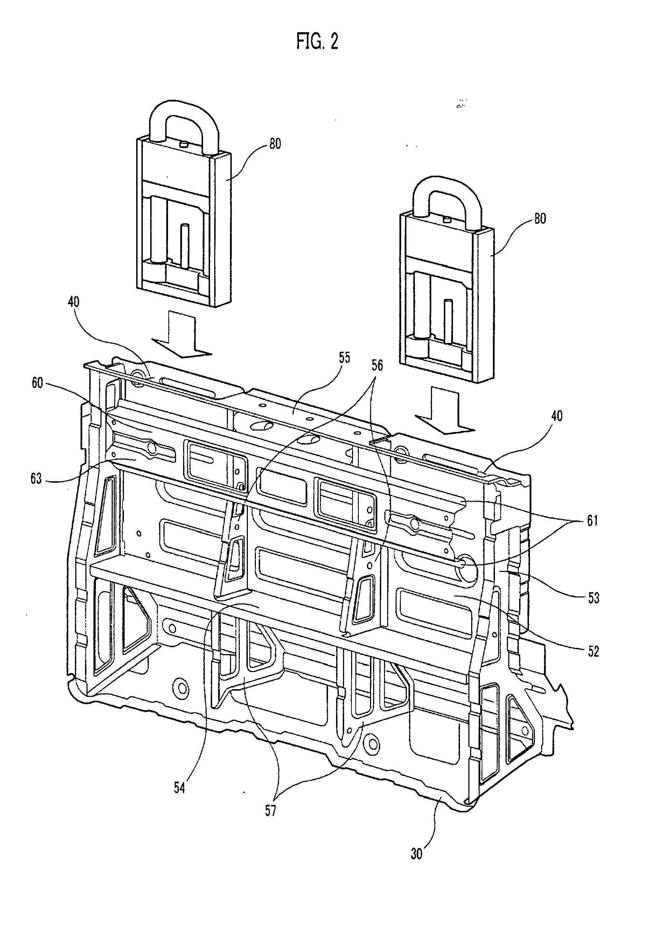

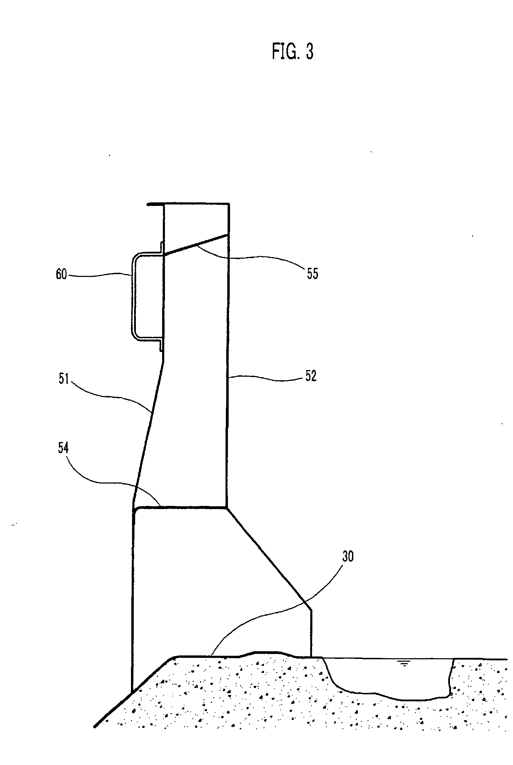

FIG. 2 is a perspective view of a baffle structure of a vehicle according to an exemplary embodiment of the present invention, and FIG. 3 is a side view of the baffle structure of a vehicle according to the exemplary embodiment of the present invention.

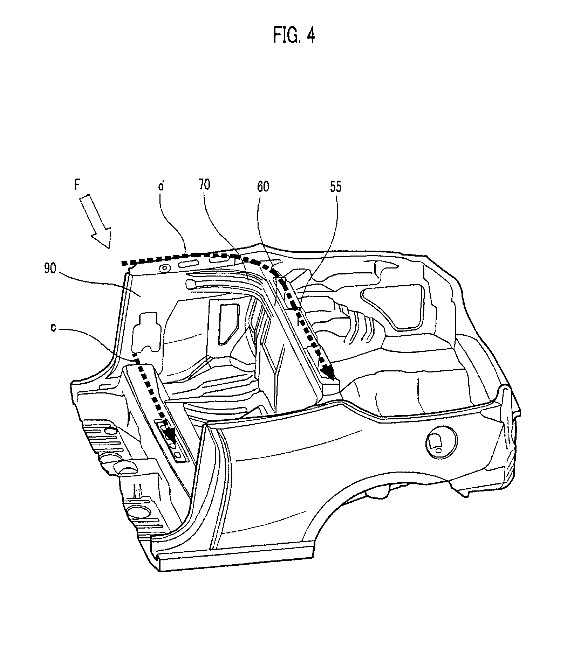

FIG. 4 is a perspective view showing the transmission path of impact energy when a side impact is incurred.

A baffle structure of a vehicle according to an exemplary embodiment of the present invention includes a baffle with the ROPS 80 installed therein, a reinforcement member 60 for reinforcing the rigidity of the baffle, and a connecting member 70 for connecting the reinforcement member 60 and a side member of the vehicle.

The baffle includes a front member 51 and a rear member 52, which are configured on a rear floor member 30 and form a space. A side member 53 is connected to the front member 51 and the rear member 52 at end sides of the front member 51 and the rear member 52. A lower member 54 is connected to the front member 51, the rear member 52, and the side member 53, wherein the lower member 54 horizontally divides the space that is formed by the front member 51 and the rear member 52. An upper member 55 is connected to upper sides of the front member 51 and the rear member 52. A first center member 56 is connected to the front member 51, the rear member 52, and the lower member 54, wherein the first center member 56 vertically divides the space that is divided by the lower member 54.

A second center member 57 is disposed under the lower member 54 for supporting the lower member 54.

The ROPS 80 is configured through an opening 40, which is formed on both sides of the upper member 55.

The reinforcement member 60 is connected to the front member 51.

The reinforcement member 60 includes a connecting flange 61 connected to the front member 51, and a center portion 63 that is bent at the connecting flange 61 and is disposed apart from the front member 51.

FIG. 4 is a perspective view showing the transmission path of impact energy when a side impact is incurred.

As shown in FIG. 4, in the case that a side impact is incurred, a part of the impact is transmitted in the "c" direction via the rear floor member 30 and another part of the impact is transmitted to the baffle via the connecting member 70, namely the impact is transmitted in the "d" direction.

Describing in detail, the side impact is transmitted to the reinforcement member 60 disposed in the center of the vehicle via the connecting member 70 so that the impact is absorbed efficiently.

In the baffle structure according to an exemplary embodiment of the present invention, in the case that a side impact is incurred the impact is transmitted to the center of the vehicle so that the impact is absorbed efficiently.

While this invention has been described in connection with what is presently considered to be practical exemplary embodiments, it is to be understood that the invention is not limited to the disclosed embodiments, but, on the contrary, is intended to cover various modifications and arrangements included within the scope of the appended claims.

## Claims

1. A baffle structure for a vehicle, comprising:
a baffle including a Rool-Over Protection System (ROPS, 80):
a reinforcement member (60) reinforcing the rigidity of the baffle; and
a connecting member (70) for connecting the reinforcement member (60) and a side member (90) of the vehicle,
wherein the baffle comprises:
a rear floor member (30);
a front member (51) disposed on the rear floor member (30);
a rear member (52), apart from the front member (51), disposed on the rear floor member (30);
a side member (53) connected to end sides of the front member (51) and the rear member (52);
a lower member (54) connected to the front member (51), the rear member (52), and the side member (53);
an upper member (55), which is parallel with the lower member (54), connected to upper parts of the front member (51) and the rear member (52); and
a first center member (56), which is perpendicular to the rear floor member (30), connected to the front member (51), the rear member (52), the upper member (55), and the lower member (54),
**characterized in that**
the baffle further comprises a second center member (57), which is perpendicular to the rear floor member (30) and is connected to the front member (51), the rear member (52), and the lower member (54) so that the second center member (57) supports the first center member (56).

2. The baffle structure of claim 1, wherein the reinforcement member (60) is connected to the front member (51).

3. The baffle structure of claim 2, wherein the reinforcement member (60) comprises:
a connecting flange (61) connected to the front member (51); and
a center portion (63) that is bent at the connecting flange (61) and is disposed apart from the front member (51).

## Patentansprüche

1. Eine Umlenkplatteneinrichtung für ein Kraftfahrzeug, aufweisend:
eine Umlenkplatte, die ein Überroll-Schutzsystem (ROPS, 80) aufweist,
ein Versteifungselement (60), das die Steifigkeit der Umlenkplatte verstärkt, und
ein Verbindungsmittel (70), um das Versteifungselement (60) und ein Seitenelement (90) des Fahrzeugs miteinander zu verbinden,
wobei die Umlenkplatte aufweist:
ein hinteres Bodenelement (30),
ein vorderes Element (51), das an dem hinteren Bodenelement (30) angeordnet ist,
ein hinteres Element (52) getrennt von dem vorderen Element (51), das an dem hinteren Bodenelement (30) angeordnet ist,
ein Seitenelement (53), das mit Endseiten des vorderen Elements (51) und des hinteren Elements (52) verbunden ist,
ein unteres Element (54), das mit dem vorderen Element (51), dem hinteren Element (52) und dem Seitenelement (53) verbunden ist,
ein oberes Element (55), das parallel zu dem unteren Element (54) ist und mit oberen Teilen des vorderen Elements (51) und des hinteren Elements (52) verbunden ist, und
ein erstes zentrales Element (56), das senkrecht zu dem hinteren Bodenelement (30) ist und mit dem vorderen Element (51), dem hinteren Element (52), dem oberen Element (55) und dem unteren Element (54) verbunden ist,
**dadurch gekennzeichnet, dass**
die Umlenkplatte ferner ein zweites zentrales Element (57) aufweist, das senkrecht zu dem hinteren Bodenelement (30) ist und mit dem vorderen Element (51), dem hinteren Element (52) und dem unteren Element (54) verbunden ist, so dass das zweite zentrale Element (57) das erste zentrale Element (56) abstützt.

2. Die Umlenkplatteneinrichtung gemäß Anspruch 1, wobei das Versteifungselement (60) mit dem vorderen Element (51) verbunden ist.

3. Die Umlenkplatteneinrichtung gemäß Anspruch 2, wobei das Versteifungselement (60) aufweist:
einen Verbindungsflansch (61), der mit dem vorderen Element (51) verbunden ist, und
einen zentralen Abschnitt (63), der an dem Verbindungsflansch (61) gekrümmt ist und getrennt von dem vorderen Element (51) angeordnet ist.

## Revendications

1. Structure de déflecteur de véhicule, comprenant:
un déflecteur comprenant un système de protection en cas de renversement (ROPS, 80);
un élément de renfort (60) renforçant la rigidité du déflecteur; et
un élément de raccordement (70) pour raccorder l'élément de renfort (60) et un élément latéral (90) du véhicule,
dans laquelle le déflecteur comprend:
un élément de plancher arrière (30);
un élément avant (51) disposé sur l'élément de plancher arrière (30);
un élément arrière (52), séparé de l'élément avant (51), disposé sur l'élément de plancher arrière (30) ;
un élément latéral (53) raccordé aux côtés d'extrémité de l'élément avant (51) et de l'élément arrière (52) ;
un élément inférieur (54) raccordé à l'élément avant (51), l'élément arrière (52) et l'élément latéral (53) ;
un élément supérieur (55), qui est parallèle à l'élément inférieur (54), raccordé aux parties supérieures de l'élément avant (51) et à l'élément arrière (52) ; et
un premier élément central (56), qui est perpendiculaire à l'élément de plancher arrière (30), raccordé à l'élément avant (51), l'élément arrière (52), l'élément supérieur (55) et l'élément inférieur (54),
**caractérisée en ce que**
le déflecteur comprend en outre un second élément central (57), qui est perpendiculaire à l'élément de plancher arrière (30) et est raccordé à l'élément avant (51), l'élément arrière (52) et l'élément inférieur (54) de sorte que le second élément central (57) supporte le premier élément central (56).

2. Structure de déflecteur selon la revendication 1, dans laquelle l'élément de renfort (60) est raccordé à l'élément avant (51).

3. Structure de déflecteur selon la revendication 2, dans laquelle l'élément de renfort (60) comprend :
une bride de raccordement (61) raccordée à l'élément avant (51); et
une partie centrale (63) qui est courbée au niveau de la bride de raccordement (61) et est disposée à l'écart de l'élément avant (51).
